# EUROPEAN PATENT APPLICATION

(11) **EP 3 862 115 A1**
(43) Date of publication of application: **11.08.2021**
(21) Application number: 21151411.2
(22) Date of filing: 13.01.2021
(51) Int. Cl.: B22F 12/00, B29C 64/171, B29C 64/255, B33Y 10/00, B33Y 30/00

(54) **APPARATUS FOR ADDITIVELY MANUFACTURING THREE-DIMENSIONAL OBJECTS**

(30) Priority: 07.02.2020 US 202016784289
(71) Applicant: Concept Laser GmbH, 96215 Lichtenfels (DE)
(72) Inventor: Braunroth, Domenik, 96215 Lichtenfels (DE)
(74) Representative: Hafner & Kohl PartmbB

(57) **Abstract**

An additive manufacturing apparatus (1) includes a build region arrangement (8) that has a first build region for additively building up at least one first object, and at least one second build region for additively building at least one second object, with the at least one second build region being separate from the first build region. The build region arrangement (8) includes at least one build material application device (6) for applying build material (3) in the first build region and/or in the at least one second build region. The build region arrangement (8) include a first overflow region for receiving build material (3) which was not applied in the first build region and/or in the at least one second build region, and/or at least one second overflow region for receiving build material (3) which was not applied in the first build region and/or in the at least one second build region.

## Description

### BRIEF DESCRIPTION

Aspects and advantages will be set forth in part in the following description, or may be obvious from the description, or may be learned through practicing the presently disclosed subject matter.

In one aspect, the present disclosure embraces apparatuses for additively manufacturing three-dimensional objects. An exemplary apparatus includes a build region arrangement, and an exemplary build region arrangement may include a first build region for additively building up at least one first three-dimensional object during operation of the apparatus, and at least one second build region for additively building at least one second three-dimensional object during operation of the apparatus, with the at least one second build region being separate from the first build region. An exemplary build region arrangement may additionally or alternatively include at least one build material application device for applying build material in the first build region and/or in the at least one second build region. An exemplary build region arrangement may additionally or alternatively include a first overflow region for receiving build material which was not applied in the first build region and/or in the at least one second build region via the at least one build material application device, and/or at least one second overflow region for receiving build material which was not applied in the first build region and/or in the at least one second build region via the at least one build material application device.

In another aspect, the present disclosure embraces methods of additively manufacturing three-dimensional objects. An exemplary method may include moving at least one build material application device relative to a first build region and relative to at least one second build region. The first build region may be for additively building up at least one first three-dimensional object during operation of the apparatus. The at least one second build region may be for additively building at least one second three-dimensional object during operation of the apparatus, and the at least one second build region may be separate from the first build region. An exemplary method may additionally or alternatively include receiving, at a first overflow region and/or at least one second overflow region, build material which was not applied in the first build region or the at least one second build region. The first overflow region may be for receiving build material which was not applied in the first build region and/or in the at least one second build region via the at least one build material application device. The at least one second overflow region may be for receiving build material which was not applied in the first build region and/or in the at least one second build region via the at least one build material application device.

An exemplary method may additionally or alternatively include selectively solidifying build material applied in the first build region and/or the at least one second build region.

These and other features, aspects and advantages will become better understood with reference to the following description and appended claims. The accompanying drawings, which are incorporated in and constitute a part of this specification, illustrate exemplary embodiments and, together with the description, serve to explain certain principles of the presently disclosed subject matter.

### BRIEF DESCRIPTION OF THE DRAWINGS

A full and enabling disclosure, including the best mode thereof, directed to one of ordinary skill in the art, is set forth in the specification, which makes reference to the appended Figures, in which:
FIG. 1 schematically depicts an exemplary apparatus for additively manufacturing three-dimensional objects; and
FIGs. 2 - 6 schematically depict top-views of exemplary build region arrangement of an apparatus for additively manufacturing three-dimensional objects.

Repeat use of reference characters in the present specification and drawings is intended to represent the same or analogous features or elements of the present disclosure.

### DETAILED DESCRIPTION

Reference now will be made in detail to exemplary embodiments of the presently disclosed subject matter, one or more examples of which are illustrated in the drawings. Each example is provided by way of explanation and should not be interpreted as limiting the present disclosure. In fact, it will be apparent to those skilled in the art that various modifications and variations can be made in the present disclosure without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

It is understood that terms such as "top", "bottom", "outward", "inward", and the like are words of convenience and are not to be construed as limiting terms. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Here and throughout the specification and claims, range limitations are combined and interchanged, and such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems.

Exemplary embodiments of the present disclosure will now be described in further detail.

In one aspect, the present disclosure relates to an apparatus for additively manufacturing three-dimensional objects, the apparatus comprising a build region arrangement, the build region arrangement.

Respective apparatuses for additively manufacturing three-dimensional objects ("additive manufacturing apparatuses") are widely known from prior art. Respective additive manufacturing apparatuses typically, comprise a build region arrangement which comprises a build region for additively building up at least one three-dimensional object during operation of the apparatus, a build material application device for applying an amount of build material in the build region, and an overflow region for receiving an amount of build material which was not applied in the build region via the at least one build material application device.

The efficiency of the build material application process is of great significance for the efficiency of the entire additive manufacturing process, different build region arrangement configurations and related build material application strategies have been suggested.

Yet, there is a steady need for further developed build region arrangement configurations and related build material application strategies allowing for a more efficient application of build material in a build region of a respective build region arrangement of respective apparatuses for additively manufacturing three-dimensional obj ects.

It is the object of the invention to provide an apparatus for additively manufacturing three-dimensional objects comprising a build region arrangement allowing for an efficient application of build material in at least one build region.

This object is achieved by an apparatus for additively manufacturing three-dimensional objects according to Claim 1. The Claims depending on Claim 1 relate to possible embodiments of the apparatus for additively manufacturing three-dimensional objects according to Claim 1.

A first aspect of the invention relates to an apparatus (hereinafter "apparatus") for additively manufacturing three-dimensional objects, e.g. technical components, by successive selective solidification, i.e. particularly successive selective irradiation-induced solidification, of build material, i.e. particularly build material layers, which can be solidified by an energy beam. A respective build material can be a powdered build material; a powdered build material may comprise at least one of a metal powder, a ceramic powder, or a polymer powder, for instance. A respective energy beam can be a directed energy beam, such as a laser beam or an electronic beam, for instance. A respective apparatus can be a selective laser sintering apparatus, a selective laser melting apparatus, a selective electron beam melting apparatus, or a binder jetting apparatus, particularly a metal binder jetting apparatus, for instance.

The apparatus comprises a number of functional and/or structural devices which are operable or operated during its operation. Each functional and/or structural device may comprise a number of functional elements. A first exemplary functional and/or structural device is a build material application device adapted to apply an amount, particularly a specific amount, of build material in at least one build region of a build region arrangement of the apparatus. Another exemplary functional and/or structural device is a solidification device adapted to successively selectively solidify build material, particularly respective layers of build material applied in the build region. A respective solidification device can be embodied as or comprise an irradiation device adapted to successively selectively irradiate build material, particularly respective layers of build material applied in a respective build region, with at least one energy beam, e.g. an electron beam or a laser beam. A respective irradiation device may comprise at least one beam generating unit adapted to generate at least one (directed) energy beam and/or at least one beam directing unit adapted to direct at least one (directed) energy beam across build material applied in at least one respective build region.

Respective functional and/or structural devices can be associated with a process chamber of the apparatus.

In either case, the apparatus comprises a build region arrangement. As will be apparent from below, the build region arrangement comprises a number of build regions for additively building at least one three-dimensional object and a number of overflow regions for receiving an amount of build material which was not applied in one of the build regions.

The build region arrangement is typically provided within the process chamber of the apparatus. Specifically, a respective build region arrangement can be provided within a bottom wall of the process chamber of the apparatus.

In an exemplary configuration, the build region arrangement comprises the following: a first build region for additively building up at least one first three-dimensional object during operation of the apparatus; at least one second build region for additively building at least one second three-dimensional object during operation of the apparatus, the at least one second build region being separate, i.e. spatially separated, from the first build region; at least one build material application device for applying an amount of build material in the first build region and/or in the at least one second build region; a first overflow region for receiving an amount of build material which was not applied in the first build region and/or in the at least one second build region via the at least one build material application device; and at least one second overflow region for receiving an amount of build material which was not applied in the first build region and/or in the at least one second build region via the at least one build material application device, the at least one second overflow region being separate, i.e. spatially separated, from the first overflow region.

The first build region typically, comprises or defines a first build plane. The first build region can be assigned with a first build container or a first build module, respectively. Specifically, the first build region can be defined by an inner volume of a respective first build container or first build module or an (upper) opening into a respective inner volume of a respective first build container or first build module, respectively. A respective first build container or first build module can comprise a carrying unit comprising at least one (vertically) moveably supported carrying element, e.g. a build platform, adapted to carry a build plate or a three-dimensional object to be additively manufactured during operation of the apparatus. A respective first build container or first build module can be attachable or attached to the process chamber, i.e. particularly to a bottom wall of the process chamber, at a first predefined position.

The second build region typically, comprises or defines a second build plane. The second build region can be assigned with a second build container or a second build module, respectively. Specifically, the second build region can be defined by an inner volume of a respective second build container or second build module or an (upper) opening into a respective inner volume of a respective second build container or second build module, respectively. A respective second build container or second build module can comprise a carrying unit comprising at least one (vertically) moveably supported carrying element, e.g. a build platform, adapted to carry a build plate or a three-dimensional object to be additively manufactured during operation of the apparatus. A respective second build container or second build module can be attachable or attached to the process chamber, i.e. particularly to a bottom wall of the process chamber, at a second predefined position (different from a respective first predefined position).

The at least one build material application device 6 serves for applying an amount of build material in the first build region and/or in the at least one second build region. By applying an amount of build material in the first and/or second build region, build material layers are formed in the first and/or second build region, which build material layers are to be selectively solidified during operation of the apparatus. Thus, the build material application device is adapted to apply an amount of build material in the first and/or second build region so as to form build material layers which are to be selectively solidified during operation of the apparatus.

A respective build material application device may comprise at least one build material application element. A respective build material application element can be built as or comprise a re-coating element, e.g. a re-coating blade. Hence, the build material application device can be built as a re-coating device, comprising at least one build material application element being built as a re-coating element, particularly a re-coating blade, or comprising a re-coating element, particularly a re-coating blade. Yet, other embodiments of a respective build material application device and respective build material application elements are conceivable; as such, a build material application element can be built as or comprise a build material containment having at least one, particularly gate-like, opening through which build material may exit the build material containment so as to apply an amount, particularly a specific amount, of build material in the first and/or second build region of the apparatus. A respective at least one opening is typically, controllably closable or openable by at least closing element which is moveably supported in at least one degree of freedom of motion relative to the respective at least one opening.

A respective build material application device is typically, moveably supported in at least one motion path in which the build material application device is moveable or moved across at least one of the first and/or second build region. Hence, when moving the build material application device in a respective motion path, the build material application device is moved across at least one of the first and/or second build region so that it is possible to apply an amount of build material in at least one of the first and/or second build region thereby, forming a build material layer in at least one of the first and/or second build region which build material layer is to be selectively solidified during operation of the apparatus. A respective motion path may thus, be deemed or denoted as a build material application path in which build material is applied in at least one of the first and/or second build region.

As such, at least one drive means, such as a motor, adapted to generate a drive force resulting in a movement of the build material application device in the respective motion path can be associated with the respective build material application device.

The first overflow region typically, comprises or defines a first overflow plane. The first overflow region can be assigned with a first overflow container or a first overflow module, respectively. Specifically, the first overflow region can be defined by an inner volume of a respective first overflow container or first overflow module or an (upper) opening into a respective inner volume of a respective first overflow container or first overflow module, respectively. A respective first overflow container or first overflow module can be attachable or attached to the process chamber, i.e. particularly to a bottom wall of the process chamber, at a third predefined position (different from respective first and second predefined positions).

The at least one second overflow region typically, comprises or defines a second overflow plane. The at least one second overflow region can be assigned with at least one second overflow container or at least one second overflow module, respectively. Specifically, the at least one second overflow region can be defined by an inner volume of a respective second overflow container or second overflow module or an (upper) opening into a respective inner volume of a respective second overflow container or second overflow module, respectively. A respective second overflow container or second overflow module can be attachable or attached to the process chamber, i.e. particularly to a bottom wall of the process chamber, at a fourth predefined position (different from respective first, second, and third predefined positions).

The build region arrangement thus, comprises at least two build regions and at least two overflow regions which allows for a highly efficient and flexible additive manufacturing processes during operation of the apparatus.

Exemplary configurations of the build region arrangement are specified in the following exemplary embodiments:

According to exemplary embodiments, the build region arrangement comprises a respective first build region, a respective at least one second build region, a respective first overflow region, and a respective at least one second overflow region arranged in at least one series arrangement. The build region arrangement may thus, comprise a series arrangement of a respective first build region, a respective at least one second build region, a respective first overflow region, and a respective at least one second overflow region in which a respective first build region, a respective at least one second build region, a respective first overflow region, and a respective at least one second overflow region are arranged in series. In other words, the first build region, the at least one second build region, the first overflow region, and the at least one second overflow region can be arranged one after another in a row- or a row-like arrangement.

According to a first specific exemplary embodiment, the build region arrangement comprises a first overflow region, a first build region, a second build region, and a second overflow region arranged in a series arrangement, whereby at least one build material application device is assigned to the series arrangement. In the first specific exemplary embodiment, the aforementioned elements of the build region arrangement are arranged in the following order or sequence, the first overflow region is (directly) followed by and thus, (directly) adjacent to the first build region, the first build region is (directly) followed by and thus, (directly) adjacent to the second build region, the second build region is (directly) followed by and thus, (directly) adjacent to the second overflow region.

In the first specific exemplary embodiment, the at least one build material application device can be moveably supported in a motion path in which the build material application device is moveable or moved across the first overflow region, the first build region, the second build region, and the second overflow region. This configuration allows for implementing efficient and flexible additive manufacturing processes during operation of the apparatus.

In a variation of the first specific exemplary embodiment, at least two build material application devices can be assigned to the series arrangement, whereby a first build material application device is moveably supported in a first motion path in which the first build material application device is moveable or moved across the first overflow region and the first build region, or vice versa, and at least one second build material application device is moveably supported in a second motion path in which the at least one second build material application device is moveable or moved across the second build region and the second overflow region, or vice versa. This configuration allows for implementing efficient and flexible additive manufacturing processes during operation of the apparatus.

According to a second specific exemplary embodiment, the build region arrangement can comprise a first series arrangement and at least one second series arrangement, whereby the first series arrangement comprises a first overflow region, a first build region, a second build region, and a second overflow region arranged in series, whereby at least one first build material application device is assigned to the first series arrangement, and the second series arrangement comprises a first overflow region, a first build region, a second build region, and a second overflow region arranged in series, whereby at least one second build material application device is assigned to the second series arrangement. The second specific exemplary embodiment thus, comprises multiples of the first specific exemplary embodiments. The second specific exemplary embodiment can thus, be deemed or denoted as an extension of the first specific exemplary embodiment in a first spatial direction, e. g. an extension in a y-direction with respect to a x-direction and an orthogonal y-direction of a bottom plane of a process chamber, whereby the x-direction corresponds to the direction of a motion path of at least one build material application device.

In the second specific exemplary embodiment, the at least one first build material application device can be moveably supported in a first motion path in which the build material application device is moveable or moved across the first overflow region, the first build region, the second build region, and the second overflow region, or vice versa, of the first series arrangement, and the at least one second build material application device can be moveably supported in a second motion path in which the build material application device is moveable or moved across the first overflow region, the first build region, the second build region, and the second overflow region, or vice versa, of the second series arrangement. This configuration allows for implementing efficient and flexible additive manufacturing processes during operation of the apparatus.

In a variation of the second specific exemplary embodiment, at least two build material application devices can be assigned to the first series arrangement, whereby a first build material application device is moveably supported in a first motion path in which the first build material application device is moveable or moved across the first overflow region and the first build region, or vice versa, of the first series arrangement, and at least one second build material application device is moveably supported in a second motion path in which the at least one second build material application device is moveable or moved across the second build region and the second overflow region, or vice versa, of the first series arrangement; and/or at least two build material application devices are assigned to the second series arrangement, whereby a first build material application device is moveably supported in a first motion path in which the first build material application device is moveable or moved across the first build region and the first overflow region, or vice versa, of the second series arrangement, and at least one second build material application device is moveably supported in a second motion path in which the at least one second build material application device is moveable or moved across the second build region and the second overflow region, or vice versa, of the second series arrangement. This configuration allows for implementing efficient and flexible additive manufacturing processes during operation of the apparatus.

In all variations of the second specific exemplary embodiment, the first series arrangement can be arranged parallel to the at least one second series arrangement or the first series arrangement can be arranged not parallel, particularly angled, more particularly perpendicularly, (relative) to the at least one second series arrangement, or vice versa.

According to a third specific exemplary embodiment, the build region arrangement comprises a first overflow region, a first build region, a second overflow region, a second build region, and a third overflow region arranged in a series arrangement, whereby at least one build material application device is assigned to the series arrangement. In the third specific exemplary embodiment, the aforementioned elements of the build region arrangement are arranged in the following order or sequence, the first overflow region is (directly) followed by and thus, (directly) adjacent to the first build region, the first build region is (directly) followed by and thus, (directly) adjacent to the second overflow region, the second overflow region is (directly) followed by and thus, (directly) adjacent to the second build region, the second build region is (directly) followed by and thus, (directly) adjacent to the third overflow region.

In the third specific exemplary embodiment, the at least one build material application device can be moveably supported in a motion path in which the build material application device is moveable or moved across the first overflow region, the first build region, the second overflow region, the second build region, and the third overflow region. This configuration allows for implementing efficient and flexible additive manufacturing processes during operation of the apparatus.

In a variation of the third specific exemplary embodiment, at least two build material application devices can be assigned to the series arrangement, whereby a first build material application device is moveably supported in a first motion path in which the first build material application device is moveable or moved across the first overflow region, the first build region, and the second overflow region, or vice versa, and at least one second build material application device is moveably supported in a second motion path in which the at least one second build material application device is moveable or moved across the second overflow region, the second build region, and the third overflow region, or vice versa. This configuration allows for implementing efficient and flexible additive manufacturing processes during operation of the apparatus.

According to a fourth specific exemplary embodiment, the build region arrangement can comprise a first series arrangement and at least one second series arrangement, whereby the first series arrangement comprises a first overflow region, a first build region, a second overflow region, a second build region, and a third overflow region arranged in series, whereby at least one first build material application device is assigned to the first series arrangement, and the second series arrangement comprises a first overflow region, a first build region, a second overflow region, a second build region, and a third overflow region arranged in series, whereby at least one second build material application device is assigned to the second series arrangement. The fourth specific exemplary embodiment can thus, be deemed or denoted as an extension of the third specific exemplary embodiment, e. g. an extension in a y-direction with respect to a x-direction and an orthogonal y-direction of a bottom plane of a process chamber, whereby the x-direction corresponds to the direction of a motion path of at least one build material application device.

In the fourth specific exemplary embodiment, the at least one first build material application device is moveably supported in a first motion path in which the build material application device is moveable or moved across the first overflow region, the first build region, the second overflow region, the second build region, and the third overflow region of the first series arrangement, or vice versa, and the at least one second build material application device is moveably supported in a second motion path in which the build material application device is moveable or moved across the first overflow region, the first build region, the second overflow region, the second build region, and the third overflow region of the second series arrangement, or vice versa. This configuration allows for implementing efficient and flexible additive manufacturing processes during operation of the apparatus.

In a variation of the fourth specific exemplary embodiment, at least two build material application devices are assigned to the first series arrangement, whereby a first build material application device is moveably supported in a first motion path in which the first build material application device is moveable or moved across the first overflow region, the first build region, and the second overflow region of the first series arrangement, or vice versa, and at least one second build material application device is moveably supported in a second motion path in which the at least one second build material application device is moveable or moved across the second overflow region, the second build region, and the third overflow region of the first series arrangement, or vice versa; and/or at least two build material application devices are assigned to the second series arrangement, whereby a first build material application device is moveably supported in a first motion path in which the first build material application device is moveable or moved across the first overflow region, the first build region, and the second overflow region of the second series arrangement, or vice versa, and at least one second build material application device is moveably supported in a second motion path in which the at least one second build material application device is moveable or moved across the second overflow region, the second build region, and the third overflow region of the second series arrangement, or vice versa. This configuration allows for implementing efficient and flexible additive manufacturing processes during operation of the apparatus.

In all variations of the fourth specific exemplary embodiment, the first series arrangement can be arranged parallel to the at least one second series arrangement, e.g. parallel in a respective y-direction of a bottom plane of a process chamber, or the first series arrangement can be arranged not parallel, particularly angled, more particularly perpendicularly, (relative) to the at least one second series arrangement, or vice versa.

According to a fifth specific exemplary embodiment, the build region arrangement can comprise a first series arrangement and a second series arrangement, whereby the first series arrangement comprises a first overflow region, a (single) build region, and a second overflow region arranged in series, whereby at least one first build material application device is assigned to the first series arrangement; and the second series arrangement comprises a first overflow region, a (single) build region, and a second overflow region arranged in series, whereby at least one second build material application device is assigned to the second series arrangement. In the fifth specific exemplary embodiment, the aforementioned elements of the first series arrangement are arranged in the following order or sequence, the first overflow region is (directly) followed by and thus, (directly) adjacent to the first build region, the first build region is (directly) followed by and thus, (directly) adjacent to the second overflow region. In the fifth specific exemplary embodiment, the aforementioned elements of the second series arrangement are arranged in the following order or sequence, the first overflow region is (directly) followed by and thus, (directly) adjacent to the first build region, the first build region is (directly) followed by and thus, (directly) adjacent to the second overflow region. This configuration allows for implementing efficient and flexible additive manufacturing processes during operation of the apparatus.

In the fifth specific exemplary embodiment, the at least one first build material application device can be moveably supported in a first motion path in which the at least one first build material application device is moveable or moved across the first overflow region, the build region, and the second overflow region, or vice versa, of the first series arrangement, and the at least one second build material application device can be moveably supported in a second motion path in which the at least one second build material application device is moveable or moved across the first overflow region, the build region, and the second overflow region, or vice versa, of the second arrangement.

In the fifth specific exemplary embodiment, the first series arrangement can be arranged parallel, e.g. parallel in a respective y-direction of a bottom plane of a process chamber, to the at least one second series arrangement or the first series arrangement can be arranged not parallel, particularly angled, more particularly perpendicularly, (relative) to the at least one second series arrangement, or vice versa.

In any embodiment, motion of the respective build material application device(s) in the respective motion path(s) can be controlled by a hardware- and/or software embodied control unit being adapted to generate control information for controlling motion of the respective build material application device(s) in the respective motion path(s). Specifically, a respective control unit can be provided with machine-readable instructions for generating machine-readable control information for controlling motion of the respective build material application device(s) in the respective motion path(s).

In any embodiment, the apparatus may comprise at least one solidification device, particularly at least one irradiation device, which is moveably supported in at least one motion path in which the at least one solidification device can be moveable or moved in at least one solidification position and/or orientation, particularly in an irradiation position and/or orientation, relative to the first build region so as to selectively solidify, particularly irradiate, build material applied in the first build region and/or in a solidification position and/or orientation, particularly in an irradiation position and/or orientation, relative to the second build region so as to selectively solidify build material applied in the second build region. This configuration allows for implementing efficient and flexible additive manufacturing processes during operation of the apparatus.

A second aspect of the invention relates to a build region arrangement for an apparatus for additively manufacturing three-dimensional objects, particularly for an apparatus according to the first aspect of the invention. The build region arrangement comprises: a first build region for additively building up at least one first three-dimensional object during operation of the apparatus; at least one second build region for additively building at least one second three-dimensional object during operation of the apparatus, the at least one second build region being separate from the first build region; at least one build material application device for applying an amount of build material in the first build region and/or in the at least one second build region; a first overflow region for receiving an amount of build material which was not applied in the first build region and/or in the at least one second build region via the at least one build material application device; at least one second overflow region for receiving an amount of build material which was not applied in the first build region and/or in the at least one second build region via the at least one build material application device.

All annotations regarding the apparatus according to the first aspect of the invention also apply to the build region arrangement according to the second aspect of the invention.

A third aspect of the invention relates to methods for additively manufacturing three-dimensional objects. An exemplary method comprises: moving at least one first build material application device relative to at least one build region of a build region arrangement according to the second aspect of the invention o as to apply an amount of build material in the at least one build region of the build region arrangement; optionally receiving an amount of build material which was not applied in a build region of the build region arrangement by at least one overflow region; and selectively solidifying the amount of build material applied in the at least one build region of the build region arrangement.

All annotations regarding the apparatus according to the first aspect of the invention and all annotations regarding the build region arrangement according to the second aspect of the invention also apply to the method according to the third aspect of the invention.

Exemplary embodiments of the invention are described with reference to the Figures.

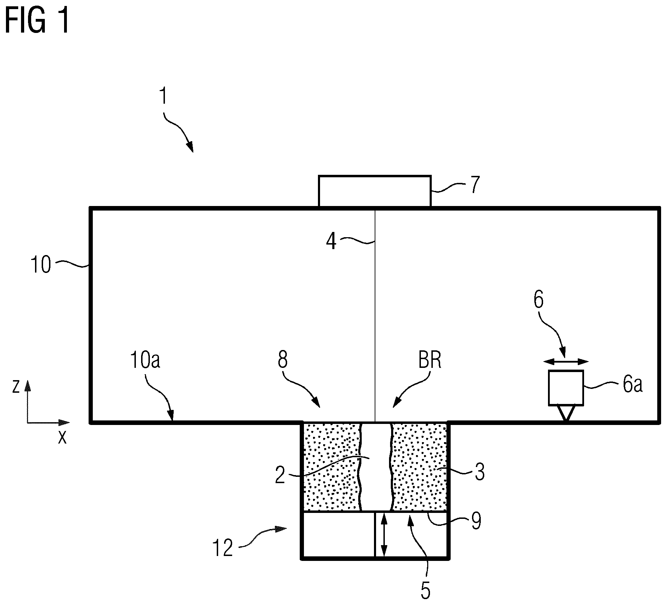

FIG. 1 shows a principle drawing of an apparatus 1 for additively manufacturing three-dimensional objects 2, e.g. technical components, by successive selective solidification of layers of a powdered build material 3, e.g. a metal powder, which can be solidified by at least one energy beam 4, e.g. a laser beam, according to an exemplary embodiment. The apparatus 1 can be a selective laser melting apparatus, for instance. However, the remarks in context with the Figures also apply to other embodiments of a respective apparatus such as a selective electron beam melting apparatus or a binder jetting apparatus, particularly a metal binder jetting apparatus, for instance.

The apparatus 1 comprises a number of functional and/or structural devices which are operable or operated during its operation. Each functional and/or structural device may comprise a number of functional elements.

A first exemplary functional device is a carrying element 5 for a build plate 9, which may form part of a detachable build container 11 or build module, respectively of the apparatus 1, on which the actual additive build-up of the three-dimensional object 2 takes place during operation of the apparatus 1. The build container 11, particularly the build plate, may define the spatial extension of a build region BP in which build material layers, which build material layers are successively selectively solidified during operation of the apparatus 1, are successively applied.

A further exemplary functional device is a build material application device 6, e.g. a re-coating device, adapted to successively apply layers of build material 3 which are to be successively selectively solidified during operation of the apparatus 1 in at least one build region BR, the build material application device 6 comprises at least one moveably supported build material application element 6a, e.g. a re-coating element, particularly a re-coating blade, or a build material containment having at least one, particularly gate-like, opening through which build material 3 may exit the build material containment so as to apply an amount, particularly a specific amount, of build material in at least one build region BR.

Another exemplary functional device is a solidification device 7 adapted to successively selectively solidify respective layers of build material 3 applied in a build region. The solidification device 7 can be embodied as or can comprise an irradiation device adapted to successively selectively irradiate build material, particularly respective layers of build material 3 applied in at least one respective build region BR, with at least one energy beam 4, e.g. an electron beam or a laser beam. A respective irradiation device may comprise at least one beam generating unit adapted to generate at least one (directed) energy beam and/or at least one beam directing unit adapted to direct at least one (directed) energy beam across build material applied in at least one respective build region BR.

Respective functional and/or structural devices can be associated with a process chamber 10 of the apparatus 1. The process chamber 10 particularly, comprising wall elements, such as a bottom wall 10a, delimiting an interior volume of the process chamber 10.

In either case, the apparatus 1 comprises a build region arrangement 8 comprising a number of build regions BR1, BR2 for additively building at least one three-dimensional object and a number of overflow regions OR1, OR2 for receiving an amount of build material 3 which was not applied in one of the build regions BR1, BR2.

The build region arrangement 8 is typically provided within the process chamber 10 of the apparatus 1. Specifically, the respective build region arrangement 8 is provided within a bottom wall 10a of the process chamber 10 of the apparatus 1.

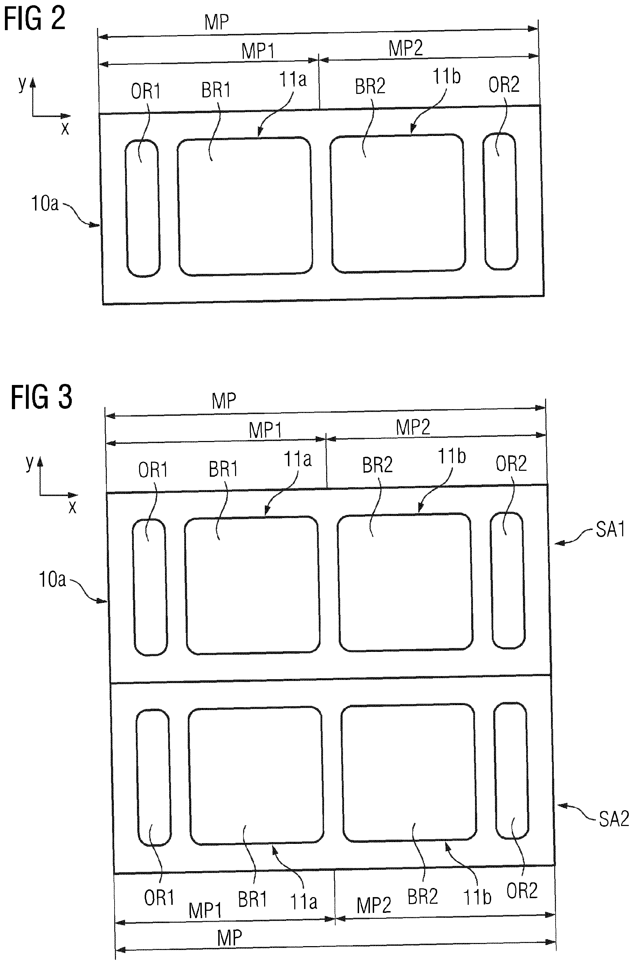

FIGs. 2 - 6 each show a top-view of a build region arrangement 8 of an apparatus 1 for additively manufacturing three dimensional objects 2, such as the apparatus 1 of FIG 1.

An exemplary build region arrangement 8 generally comprises the following: - a first build region BR1 for additively building up at least one first three-dimensional object 2 during operation of the apparatus 1; at least one second build region BR2 for additively building at least one second three-dimensional object 2 during operation of the apparatus 1, the at least one second build region BR2 being separate, i.e. spatially separated, from the first build region BR1; at least one build material application device 6 (not explicitly shown in FIGs. 2 - 6) for applying an amount of build material 3 in the first build region BR1 and/or in the at least one second build region BR2; a first overflow region OR1 for receiving an amount of build material which was not applied in the first build region BR1 and/or in the at least one second build region BR2 via the at least one build material application device 6; and at least one second overflow region OR2 for receiving an amount of build material 3 which was not applied in the first build region BR1 and/or in the at least one second build region BR2 via the at least one build material application device 6, the at least one second overflow region OR2 being separate, i.e. spatially separated, from the first overflow region OR1.

As is apparent from FIGs. 2 - 6, the first build region BR1 comprises or defines a first build plane. The first build region BR1 can be assigned with a first build container 11 or a first build module, respectively. Specifically, the first build region BR1 can be defined by an inner volume of a respective first build container 11a or first build module or an (upper) opening into a respective inner volume of a respective first build container 11a or first build module, respectively. A respective first build container 11a or first build module can comprise a carrying unit comprising at least one (vertically) moveably supported carrying element 5, e.g. a build platform, adapted to carry a build plate 9 or a three-dimensional object 2 to be additively manufactured during operation of the apparatus 1. A respective first build container 11a or first build module can be attachable or attached to the process chamber 10, i.e. particularly to a bottom wall 10a of the process chamber 10, at a first predefined position.

As is further apparent from FIGs. 2 - 6, the second build region BR2 comprises or defines a second build plane. The second build region BR2 can be assigned with a second build container 11b or a second build module, respectively. Specifically, the second build region BR2 can be defined by an inner volume of a respective second build container 11b or second build module or an (upper) opening into a respective inner volume of a respective second build container 11b or second build module, respectively. A respective second build container 11b or second build module can comprise a carrying unit comprising at least one (vertically) moveably supported carrying element 5, e.g. a build platform, adapted to carry a build plate 9 or a three-dimensional object 2 to be additively manufactured during operation of the apparatus 1. A respective second build container 11b or second build module can be attachable or attached to the process chamber 10, i.e. particularly to a bottom wall 10a of the process chamber 10, at a second predefined position (different from a respective first predefined position).

The at least one build material application device 6 serves for applying an amount of build material in the first build region BR1 and/or in the at least one second build region BR2. By applying an amount of build material 3 in the first and/or second build region BR1, BR2, build material layers are formed in the first and/or second build region BR1, BR2, which build material layers are to be selectively solidified during operation of the apparatus 1. Thus, the build material application device 6 is adapted to apply an amount of build material in the first and/or second build region BR1, BR2 so as to form build material layers which are to be selectively solidified during operation of the apparatus 1.

The at least one build material application device 6 is moveably supported in at least one motion path MP1, MP2 (indicated by double-arrows in FIGs. 2 - 6) in which the build material application device 6 is moveable or moved across at least one of the first and/or second build region BR1, BR2. Hence, when moving the build material application device 6 in a respective motion path MP1, MP2, the build material application device 6 is moved across at least one of the first and/or second build region BR1, BR2 so that it is possible to apply an amount of build material in at least one of the first and/or second build region thereby, forming a build material layer in at least one of the first and/or second build region BR1, BR2 which build material layer is to be selectively solidified during operation of the apparatus 1. A respective motion path MP1, MP2 may thus, be deemed or denoted as a build material application path in which build material 3 is applied in at least one of the first and/or second build region BR1, BR2.

At least one drive means (not shown), such as a motor, adapted to generate a drive force resulting in a movement of the build material application device 6 in the respective motion path MP1, MP2 can be associated with the respective build material application device 6.

The first overflow region OR1 comprises or defines a first overflow plane. The first overflow region OR1 can be assigned with a first overflow container or a first overflow module (both not shown), respectively. Specifically, the first overflow region OR1 can be defined by an inner volume of a respective first overflow container or first overflow module or an (upper) opening into a respective inner volume of a respective first overflow container or first overflow module, respectively. A respective first overflow container or first overflow module can be attachable or attached to the process chamber 10, i.e. particularly to a bottom wall 10a of the process chamber 10, at a third predefined position (different from respective first and second predefined positions).

The at least one second overflow region OR2 comprises or defines a second overflow plane. The at least one second overflow region OR2 can be assigned with at least one second overflow container or at least one second overflow module (both not shown), respectively. Specifically, the at least one second overflow region OR2 can be defined by an inner volume of a respective second overflow container or second overflow module or an (upper) opening into a respective inner volume of a respective second overflow container or second overflow module, respectively. A respective second overflow container or second overflow module can be attachable or attached to the process chamber 10, i.e. particularly to a bottom wall 10a of the process chamber 10, at a fourth predefined position (different from respective first, second, and third predefined positions).

The build region arrangement 8 thus, comprises at least two build regions BR1, BR2 and at least two overflow regions OR1, OR2 which allows for a highly efficient and flexible additive manufacturing processes during operation of the apparatus 1.

As is apparent from FIGs. 2 - 6, the build region arrangement 8 comprises a respective first build region BR1, a respective at least one second build region BR2, a respective first overflow region OR1, and a respective at least one second overflow region OR2 arranged in at least one series arrangement. The build region arrangement 8 may thus, comprise a series arrangement of a respective first build region BR1, a respective at least one second build region BR2, a respective first overflow region OR1, and a respective at least one second overflow region OR2 in which a respective first build region BR1, a respective at least one second build region BR2, a respective first overflow region OR1, and a respective at least one second overflow region OR2 are arranged in series. In other words, the first build region BR1, the at least one second build region BR2, the first overflow region OR1, and the at least one second overflow region OR2 can be arranged one after another in a row- or a row-like arrangement.

According to the exemplary embodiment of FIG. 2, the build region arrangement 8 comprises (from left to right) a first overflow region OR1, a first build region BR1, a second build region BR2, and a second overflow region OR2 arranged in a series arrangement. At least one build material application device 6 is assigned to the series arrangement. In the embodiment of FIG. 2, the aforementioned elements of the build region arrangement 8 are arranged in the following order or sequence (form left to right), the first overflow region OR1 is (directly) followed by and thus, (directly) adjacent to the first build region BR1, the first build region BR1 is (directly) followed by and thus, (directly) adjacent to the second build region BR2 , the second build region BR2 is (directly) followed by and thus, (directly) adjacent to the second overflow region OR2.

In the exemplary embodiment of FIG. 2, the at least one build material application device 6 can be moveably supported in a motion path MP in which the build material application device is moveable or moved across the first overflow region OR1, the first build region BR1, the second build region BR2, and the second overflow region OR2. This configuration allows for implementing efficient and flexible additive manufacturing processes during operation of the apparatus 1.

In a variation of the exemplary embodiment of FIG. 2, at least two build material application devices 6 can be assigned to the series arrangement, whereby a first build material application device 6 is moveably supported in a first motion path MP1 in which the first build material application device 6 is moveable or moved across the first overflow region OR1 and the first build region BR1, or vice versa, and at least one second build material application device 6 is moveably supported in a second motion path MP2 in which the at least one second build material application device 6 is moveable or moved across the second build region BR2 and the second overflow region OR2, or vice versa. This configuration allows for implementing efficient and flexible additive manufacturing processes during operation of the apparatus 1.

According to the exemplary embodiment of FIG. 3, the build region arrangement 8 comprises a first series arrangement SA1 and at least one second series arrangement SA2, whereby the first series arrangement SA1 comprises a first overflow region OR1, a first build region BR1, a second build region BR2, and a second overflow region OR2 arranged in series. At least one first build material application device 6 (not shown) is assigned to the first series arrangement SA1. The second series arrangement SA2 comprises a first overflow region OR1, a first build region BR1, a second build region BR2, and a second overflow region OR2 arranged in series. At least one second build material application device 6 (not shown) is assigned to the second series arrangement SA2. The exemplary embodiment of FIG. 3 thus, comprises multiples of the exemplary embodiment of FIG. 2. The exemplary embodiment of FIG. 3 can thus, be deemed or denoted as an extension of the exemplary embodiment of FIG. 2 in a first spatial direction, e. g. an extension in the y-direction with respect to a x-direction and an orthogonal y-direction of the bottom plane 10a of the process chamber 10, whereby the x-direction corresponds to the direction of a motion path MP of at least one build material application device 6.

In the exemplary embodiment of FIG. 3, the first build material application device 6 can be moveably supported in a first motion path MP1 in which the build material application device 6 is moveable or moved across the first overflow region OR1, the first build region BR1, the second build region BR2, and the second overflow region OR2, or vice versa, of the first series arrangement SA1, and the second build material application device 6 can be moveably supported in a second motion path MP2 in which the build material application device 6 is moveable or moved across the first overflow region OR1, the first build region BR1, the second build region BR2, and the second overflow region OR2, or vice versa, of the second series arrangement SA2. This configuration allows for implementing efficient and flexible additive manufacturing processes during operation of the apparatus.

In a variation of the exemplary embodiment of FIG. 3 at least two build material application devices 6 can be assigned to the first series arrangement SA1, whereby a first build material application device 6 is moveably supported in a first motion path MP1 in which the first build material application device 6 is moveable or moved across the first overflow region OR1 and the first build region BR1, or vice versa, of the first series arrangement SA1, and a second build material application device 6 is moveably supported in a second motion path MP2 in which the second build material application device 6 is moveable or moved across the second build region BR2 and the second overflow region OR2, or vice versa, of the first series arrangement SA1. Alternatively or additionally, two build material application devices 6 are assigned to the second series arrangement SA2, whereby a first build material application device 6 is moveably supported in a first motion path MP1 in which the first build material application device 6 is moveable or moved across the first build region BR1 and the first overflow region OR1, or vice versa, of the second series arrangement SA2, and at least one second build material application device 6 is moveably supported in a second motion path MP2 in which the at least one second build material application device 6 is moveable or moved across the second build region BR2 and the second overflow region OR2, or vice versa, of the second series arrangement SA2. This configuration allows for implementing efficient and flexible additive manufacturing processes during operation of the apparatus 1.

In the exemplary embodiment of FIG. 3, the first series arrangement SA1 is arranged parallel to the second series arrangement SA2. However, it is also conceivable that the first series arrangement SA1 is arranged not parallel, particularly angled, more particularly perpendicularly, (relative) to the at least one second series arrangement SA2, or vice versa.

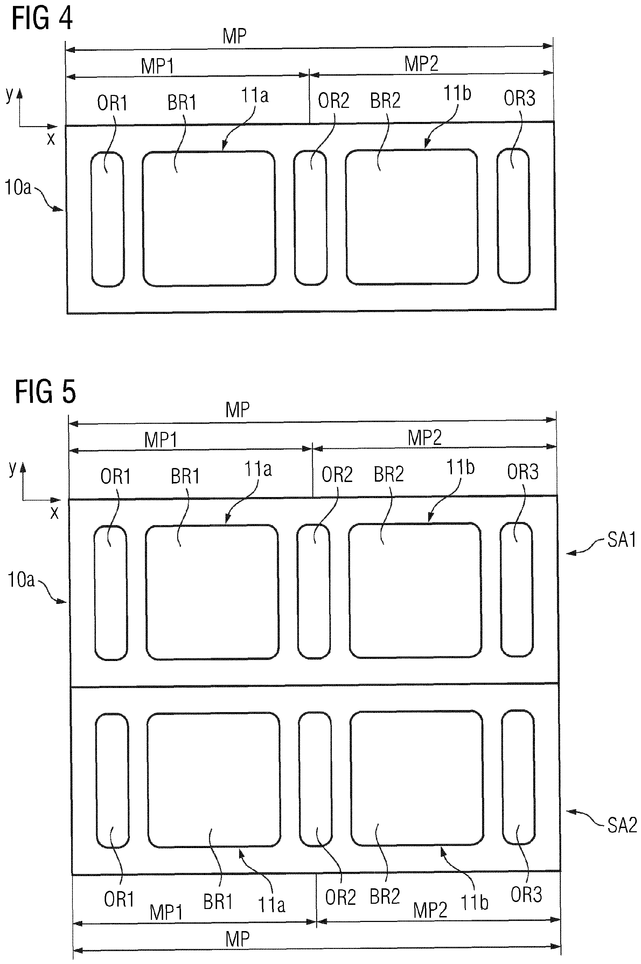

According to exemplary embodiment of FIG. 4, the build region arrangement 8 comprises (from left to right) a first overflow region OR1, a first build region BR1, a second overflow region OR2, a second build region BR2, and a third overflow region OR3 arranged in a series arrangement. At least one build material application device 6 (not shown) is assigned to the series arrangement. In the exemplary embodiment of FIG. 3, the aforementioned elements of the build region arrangement 8 are arranged in the following order or sequence (from left to right), the first overflow region OR1 is (directly) followed by and thus, (directly) adjacent to the first build region BR1, the first build region BR1 is (directly) followed by and thus, (directly) adjacent to the second overflow region OR2, the second overflow region OR2 is (directly) followed by and thus, (directly) adjacent to the second build region BR2, the second build region BR2 is (directly) followed by and thus, (directly) adjacent to the third overflow region OR3.

In the exemplary embodiment of FIG. 4, the at least one build material application device 6 can be moveably supported in a motion path MP in which the build material application device 6 is moveable or moved across the first overflow region OR1, the first build region BR1, the second overflow region OR2, the second build region BR2, and the third overflow region OR3. This configuration allows for implementing efficient and flexible additive manufacturing processes during operation of the apparatus 1.

In a variation of the exemplary embodiment of FIG. 4, at least two build material application devices 6 (both not shown) can be assigned to the series arrangement, whereby a first build material application device 6 is moveably supported in a first motion path MP1 in which the first build material application device 6 is moveable or moved across the first overflow region OR1, the first build region BR1, and the second overflow region OR2, or vice versa, and at least one second build material application device 6 is moveably supported in a second motion path MP2 in which the at least one second build material application device 6 is moveable or moved across the second overflow region OR2, the second build region BR2, and the third overflow region OR3, or vice versa. This configuration allows for implementing efficient and flexible additive manufacturing processes during operation of the apparatus 1.

According to the exemplary embodiment of FIG. 5, the build region arrangement 8 comprises a first series arrangement SA1 and a second series arrangement SA2, whereby the first series arrangement SA1 comprises a first overflow region OR1, a first build region BR1, a second overflow region OR2, a second build region BR2, and a third overflow region OR3 arranged in series. At least one first build material application device 6 (not shown) is assigned to the first series arrangement SA1. The second series arrangement SA2 comprises a first overflow region OR1, a first build region BR1, a second overflow region OR2, a second build region BR2, and a third overflow region OR3 arranged in series. At least one second build material application device 6 (not shown) is assigned to the second series arrangement. The exemplary embodiment of FIG. 5 can thus, be deemed or denoted as an extension of the exemplary embodiment of FIG. 4, e. g. an extension in the y-direction with respect to a x-direction and an orthogonal y-direction of the bottom plane 10a of the process chamber 10, whereby the x-direction corresponds to the direction of a motion path MP of at least one build material application device 6.

In the exemplary embodiment of FIG. 5, the at least one first build material application device 6 is moveably supported in a first motion path MP1 in which the build material application device 6 is moveable or moved across the first overflow region OR1, the first build region BR1, the second overflow region OR2, the second build region BR2, and the third overflow region OR3 of the first series arrangement SA1, or vice versa. The at least one second build material application device 6 is moveably supported in a second motion path MP2 in which the build material application device 6 is moveable or moved across the first overflow region OR1, the first build region BR1, the second overflow region OR2, the second build region BR2, and the third overflow region OR3 of the second series arrangement SA2, or vice versa. This configuration allows for implementing efficient and flexible additive manufacturing processes during operation of the apparatus 1.

In a variation of the exemplary embodiment of FIG. 5, at least two build material application devices 6 (both not shown) are assigned to the first series arrangement SA1, whereby a first build material application device 6 is moveably supported in a first motion path MP1 in which the first build material application device 6 is moveable or moved across the first overflow region OR1, the first build region BR1, and the second overflow region OR2 of the first series arrangement SA2, or vice versa. At least one second build material application device 6 is moveably supported in a second motion path MP2 in which the at least one second build material application device 6 is moveable or moved across the second overflow region OR2, the second build region BR2, and the third overflow region OR3 of the first series arrangement S1, or vice versa. Alternatively or additionally, at least two build material application devices 6 (both not shown) are assigned to the second series arrangement SA2, whereby a first build material application device 6 is moveably supported in a first motion path MP1 in which the first build material application device 6 is moveable or moved across the first overflow region OR1, the first build region BR1, and the second overflow region OR2 of the second series arrangement SA2, or vice versa. At least one second build material application device 6 is moveably supported in a second motion path MP2 in which the at least one second build material application device 6 is moveable or moved across the second overflow region OR2, the second build region BR2, and the third overflow region OR3 of the second series arrangement SA2, or vice versa. This configuration allows for implementing efficient and flexible additive manufacturing processes during operation of the apparatus 1.

In the exemplary embodiment of FIG. 5, the first series arrangement SA1 is arranged parallel to the second series arrangement SA2. However, it is also conceivable that the first series arrangement SA1 is arranged not parallel, particularly angled, more particularly perpendicularly, (relative) to the at least one second series arrangement SA2, or vice versa.

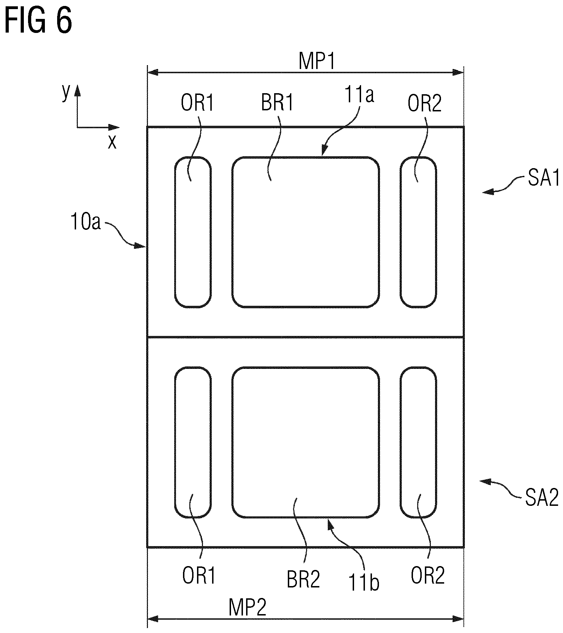

According to the exemplary embodiment of FIG. 6, the build region arrangement 8 comprises a first series arrangement SA1 and a second series arrangement SA2. The first series arrangement SA1 comprises a first overflow region OR1, a (single) build region BR, and a second overflow region OR2 arranged in series. At least one first build material application device 6 (not shown) is assigned to the first series arrangement SA1. The second series arrangement SA2 comprises a first overflow region OR1, a (single) build region BR, and a second overflow region OR2 arranged in series. At least one second build material application device 6 (not shown) is assigned to the second series arrangement SA2. In the exemplary embodiment of FIG. 6, the aforementioned elements of the first series arrangement SA1 are arranged in the following order or sequence, the first overflow region OR1 is (directly) followed by and thus, (directly) adjacent to the build region BR, the build region BR is (directly) followed by and thus, (directly) adjacent to the second overflow region OR2. In the exemplary embodiment of FIG. 6, the aforementioned elements of the second series arrangement SA2 are arranged in the following order or sequence, the first overflow region OR1 is (directly) followed by and thus, (directly) adjacent to the build region BR, the build region BR is (directly) followed by and thus, (directly) adjacent to the second overflow region OR2. This configuration allows for implementing efficient and flexible additive manufacturing processes during operation of the apparatus 1.

In the exemplary embodiment of FIG. 6, the at least one first build material application device 6 can be moveably supported in a first motion path MP1 in which the at least one first build material application device 6 is moveable or moved across the first overflow region OR1, the build region BR, and the second overflow region BR2, or vice versa, of the first series arrangement SA1. The at least one second build material application device 6 can be moveably supported in a second motion path MP2 in which the at least one second build material application device 6 is moveable or moved across the first overflow region OR1, the build region BR, and the second overflow region OR2, or vice versa, of the second arrangement SA2.

In the exemplary embodiment of FIG. 6, the first series arrangement SA1 is arranged parallel to the second series arrangement SA2. However, it is also conceivable that the first series arrangement SA1 is arranged not parallel, particularly angled, more particularly perpendicularly, (relative) to the at least one second series arrangement SA2, or vice versa.

In any of the above exemplary embodiments, motion of the respective build material application device(s) 6 in the respective motion path(s) MP, MP1, MP2 can be controlled by a hardware- and/or software embodied control unit (not shown) being adapted to generate control information for controlling motion of the respective build material application device(s) 6 in the respective motion path(s) MP, MP1, MP2. Specifically, a respective control unit can be provided with machine-readable instructions for generating machine-readable control information for controlling motion of the respective build material application device(s) 6 in the respective motion path(s) MP, MP1, MP2.

In any of the above exemplary embodiments, the apparatus 1 may comprise at least one solidification device 7, particularly at least one irradiation device, which is moveably supported in at least one motion path in which the at least one solidification device 7 can be moveable or moved in at least one solidification position and/or orientation, particularly in an irradiation position and/or orientation, relative to the first build region BR1 so as to selectively solidify, particularly irradiate, build material applied in the first build region BR1 and/or in a solidification position and/or orientation, particularly in an irradiation position and/or orientation, relative to the second build region BR2 so as to selectively solidify build material applied in the second build region BR2. This configuration allows for implementing efficient and flexible additive manufacturing processes during operation of the apparatus 1.

Exemplary embodiments allow for implementing a method of additively manufacturing three-dimensional objects 2. An exemplary method comprises: moving at least one first build material application device 6 relative to at least one build region BR, BR1, BR2 of a build region arrangement 8 so as to apply an amount of build material 3 in the at least one build region BR, BR1, BR2 of the build region arrangement 8; optionally receiving an amount of build material 3 which was not applied in a build region of the build region arrangement 8 by at least one overflow region OR1, OR2; and selectively solidifying the amount of build material applied 3 in the at least one build region BR, BR1, BR2 of the build region arrangement 8.

Further aspects of the invention are provided by the subject matter of the following clauses:
1. An apparatus (1) for additively manufacturing three-dimensional objects (2), the apparatus (1) comprising a build region arrangement (8), the build region arrangement (8) comprising: a first build region (BR, BR1) for additively building up at least one first three-dimensional object (2) during operation of the apparatus (1); at least one second build region (BR, BR2) for additively building at least one second three-dimensional object (2) during operation of the apparatus (1), the at least one second build region (BR, BR2) being separate from the first build region (BR, BR1); at least one build material application device (6) for applying an amount of build material (3) in the first build region (BR, BR1) and/or in the at least one second build region (BR, BR2); a first overflow region (OR1) for receiving an amount of build material (3) which was not applied in the first build region (BR, BR1) and/or in the at least one second build region (BR, BR2) via the at least one build material application device (6); and at least one second overflow region (OR2) for receiving an amount of build material (3) which was not applied in the first build region (BR, BR1) and/or in the at least one second build region (BR, BR2) via the at least one build material application device (6).
2. An apparatus according to any preceding clause, wherein the first build region (BR, BR1), the at least one second build region (BR, BR2), the first overflow region (OR1), and the at least one second overflow region (OR2) are arranged in at least one series arrangement.
3. An apparatus according to any preceding clause, wherein the build region arrangement (8) comprises a first overflow region (OR1), a first build region (BR, BR1), a second build region (BR, BR2), and a second overflow region (OR2) arranged in a series arrangement, whereby at least one build material application device (6) is assigned to the series arrangement.
4. An apparatus according to any preceding clause, wherein the at least one build material application device (6) is moveably supported in a motion path (motion path, MP1, MP2) in which the build material application device (6) is moveable or moved across the first overflow region (OR1), the first build region (BR, BR1), the second build region (BR, BR2), and the second overflow region (OR2).
5. An apparatus according to any preceding clause, wherein at least two build material application devices (6) are assigned to the series arrangement, whereby a first build material application device (6) is moveably supported in a first motion path (MP1) in which the first build material application device (6) is moveable or moved across the first overflow region (OR1) and the first build region (BR, BR1), or vice versa, and at least one second build material application device (6) is moveably supported in a second motion path (MP2) in which the at least one second build material application device (6) is moveable or moved across the second build region (BR, BR2) and the second overflow region (OR2), or vice versa.
6. An apparatus according to any preceding clause, wherein the build region arrangement (8) comprises a first series arrangement (SA1) and at least one second series arrangement (SA2), whereby the first series arrangement (SA1) comprises a first overflow region (OR1), a first build region (BR, BR1), a second build region (BR, BR2), and a second overflow region (OR2) arranged in series, whereby at least one first build material application device (6) is assigned to the first series arrangement (SA1), and the second series arrangement (SA2) comprises a first overflow region (OR1), a first build region (BR, BR1), a second build region (BR, BR2), and a second overflow region (OR2) arranged in series, whereby at least one second build material application device (6) is assigned to the second series arrangement (SA2).
7. An apparatus according to any preceding clause, wherein the at least one first build material application device (6) is moveably supported in a first motion path (MP1) in which the at least one first build material application device (6) is moveable or moved across the first overflow region (OR1), the first build region (BR, BR1), the second build region (BR, BR2), and the second overflow region (OR2), or vice versa, of the first series arrangement (SA1), and the at least one second build material application device (6) is moveably supported in a second motion path (MP2) in which the at least one second build material application device (6) is moveable or moved across the first overflow region (OR1), the first build region (BR, BR1), the second build region (BR, BR2), and the second overflow region (OR2), or vice versa, of the second series arrangement (SA2).
8. An apparatus according to any preceding clause, wherein at least two build material application devices (6) are assigned to the first series arrangement (SA1), whereby a first build material application device (6) is moveably supported in a first motion path (MP1) in which the first build material application device (6) is moveable or moved across the first overflow region (OR1) and the first build region (BR, BR1), or vice versa, of the first series arrangement (SA1), and at least one second build material application device (6) is moveably supported in a second motion path (MP2) in which the at least one second build material application device (6) is moveable or moved across the second build region (BR, BR2) and the second overflow region (OR2), or vice versa, of the first series arrangement (SA1); and/or at least two build material application devices (6) are assigned to the second series arrangement (SA2), whereby a first build material application device (6) is moveably supported in a first motion path (MP1) in which the first build material application device (6) is moveable or moved across the first build region (BR, BR1) and the first overflow region (OR1), or vice versa, of the second series arrangement (SA2), and at least one second build material application device (6) is moveably supported in a second motion path (MP1) in which the at least one second build material application device (6) is moveable or moved across the second build region (BR, BR2) and the second overflow region (OR2), or vice versa, of the second series arrangement (SA2).
9. An apparatus according to any preceding clause, wherein the first series arrangement (SA1) is arranged parallel to the at least one second series arrangement (SA2) or the first series arrangement (SA1) is arranged not parallel, particularly angled, to the at least one second series arrangement (SA2).
10. An apparatus according to any preceding clause, wherein the build region arrangement (8) comprises a first overflow region (OR1), a first build region (BR, BR1), a second overflow region (OR2), a second build region (BR, BR2), and a third overflow region (OR3) arranged in a series arrangement, whereby at least one build material application device (6) is assigned to the series arrangement.
11. An apparatus according to any preceding clause, wherein the at least one build material application device (6) is moveably supported in a motion path (MP) in which the build material application device (6) is moveable or moved across the first overflow region (OR1), the first build region (BR, BR1), the second overflow region (OR2), the second build region (BR, BR2), and the third overflow region (OR3).
12. An apparatus according to any preceding clause, wherein at least two build material application devices (6) are assigned to the series arrangement, whereby a first build material application device (6) is moveably supported in a first motion path (MP1) in which the first build material application device (6) is moveable or moved across the first overflow region (OR1), the first build region (BR, BR1), and the second overflow region (OR2), and at least one second build material application device (6) is moveably supported in a second motion path (MP2) in which the at least one second build material application device (6) is moveable or moved across the second overflow region (OR2), the second build region (BR, BR2), and the third overflow region (OR3).
13. An apparatus according to any preceding clause, wherein the build region arrangement (8) comprises a first series arrangement (SA1) and at least one second series arrangement (SA2), whereby the first series arrangement (SA1) comprises a first overflow region (OR1), a first build region (BR, BR1), a second overflow region (OR2), a second build region (BR, BR2), and a third overflow region (OR3) arranged in series, whereby at least one first build material application device (6) is assigned to the first series arrangement (SA1), and the second series arrangement (SA2) comprises a first overflow region (OR1), a first build region (BR, BR1), a second overflow region (OR2), a second build region (BR, BR2), and a third overflow region (OR3) arranged in series, whereby at least one second build material application device (6) is assigned to the second series arrangement (SA2).
14. An apparatus according to any preceding clause, wherein the at least one first build material application device (6) is moveably supported in a first motion path (MP1) in which the build material application device (6) is moveable or moved across the first overflow region (OR1), the first build region (BR, BR1), the second overflow region (OR2), the second build region (BR, BR2), and the third overflow region (BR, BR2) of the first series arrangement (SA1), and the at least one second build material application device (6) is moveably supported in a second motion path (MP2) in which the build material application device (6) is moveable or moved across the first overflow region (OR1), the first build region (BR, BR1), the second overflow region (OR2), the second build region (BR, BR2), and the third overflow region (OR3) of the second series arrangement (SA2).
15. An apparatus according to any preceding clause, wherein at least two build material application devices (6) are assigned to the first series arrangement (SA1), whereby a first build material application device (6) is moveably supported in a first motion path (MP1) in which the first build material application device (6) is moveable or moved across the first overflow region (OR1), the first build region (BR, BR), and the second overflow region (OR2) of the first series arrangement (SA1), and at least one second build material application device (6) is moveably supported in a second motion path (MP2) in which the at least one second build material application device (6) is moveable or moved across the second overflow region (OR2), the second build region (BR, BR2), and the third overflow region (OR3) of the first series arrangement (SA1); and/or at least two build material application devices (6) are assigned to the second series arrangement (SA2), whereby a first build material application device (6) is moveably supported in a first motion path (MP1) in which the first build material application device (6) is moveable or moved across the first overflow region (OR1), the first build region (BR, BR1), and the second overflow region (OR2) of the second series arrangement (SA2), and at least one second build material application device (6) is moveably supported in a second motion path (MP2) in which the at least one second build material application device (6) is moveable or moved across the second overflow region (OR2), the second build region (BR, BR2), and the third overflow region (OR3) of the second series arrangement (SA2).
16. An apparatus according to any preceding clause, wherein the first series arrangement (SA1) is arranged parallel to the at least one second series arrangement (SA2) or the first series arrangement (SA1) is arranged not parallel, particularly angled, to the at least one second series arrangement (SA2).
17. An apparatus according to any preceding clause, wherein the build region arrangement (8) comprises a first series arrangement (SA1) and a second series arrangement (SA2), whereby the first series arrangement (SA1) comprises a first overflow region (OR1), a build region (BR), and a second overflow region (OR2) arranged in series, whereby at least one first build material application device (6) is assigned to the first series arrangement (SA1); and the second series arrangement (SA2) comprises a first overflow region (OR1), a build region (BR), and a third overflow region (OR3) arranged in series, whereby at least one second build material application device (6) is assigned to the second series arrangement (SA2).
18. An apparatus according to any preceding clause, wherein the at least one first build material application device (6) is moveably supported in a first motion path (MP1) in which the at least one second build material application device (6) is moveable or moved across the first overflow region (OR1), the first build region ((BR, BR1), and the second overflow region (OR2) of the first series arrangement (SA1), and the at least one second build material application device (6) is moveably supported in a second motion path (MP1) in which the at least one second build material application device (6) is moveable or moved across the first overflow region (OR1), the build region (BR), and the second overflow region (OR2) of the second arrangement (SA2).
19. An apparatus according to any preceding clause, wherein the first series arrangement (SA1) is arranged parallel to the at least one second series arrangement (SA2) or the first series arrangement (SA1) is arranged not parallel, particularly angled, to the at least one second series arrangement (SA2).
20. An apparatus according to any preceding clause, further comprising at least one solidification device (7), particularly at least one irradiation device, which is moveably supported in at least one motion path in which the at least one solidification device (7) can be moveable or moved in at least one solidification position and/or orientation, particularly in an irradiation position and/or orientation, relative to the first build region (BR, BR1) so as to selectively solidify, particularly irradiate, build material (3) applied in the first build region (BR, BR1) and/or in a solidification position and/or orientation, particularly in an irradiation position and/or orientation, relative to the second build region (BR, BR2) so as to selectively solidify build material applied in the second build region (BR, BR2).
21. A Build region arrangement (8) for an apparatus (1) for additively manufacturing three-dimensional objects (2), the build region arrangement (8) comprising: a first build region (BR, BR1) for additively building up at least one first three-dimensional object (2) during operation of the apparatus (1); at least one second build region (BR, BR2) for additively building at least one second three-dimensional object (2) during operation of the apparatus (1), the at least one second build region (BR, BR2) being separate from the first build region (BR, BR1); at least one build material application device (6) for applying an amount of build material layer (3) in the first build region (BR, BR1) and/or in the at least one second build region (BR, BR2); a first overflow region (OR1) for receiving an amount of build material (3) which was not applied in the first build region (BR, BR1) and/or in the at least one second build region (BR, BR2) via the at least one build material application device (6); and at least one second overflow region (OR2) for receiving an amount of build material (3) which was not applied in the first build region (BR, BR1) and/or in the at least one second build region (BR, BR2) via the at least one build material application device (6).
22. A build region arrangement (8) according to any preceding clause, wherein the apparatus is configured according to any preceding clause.
23. A method of additively manufacturing three-dimensional objects, the method comprising: moving at least one first build material application device relative to at least one build region of a build region arrangement according to Claim 14 so as to apply an amount of build material in the at least one build region of the build region arrangement; optionally receiving an amount of build material which was not applied in a build region of the build region arrangement by at least one overflow region (OR1, OR2); and selectively solidifying the amount of build material (3) applied in the at least one build region (BR, BR1, BR2) of the build region arrangement (8).
24. A method according to any preceding clause, wherein the method is performed using a build region arrangement according to any preceding clause and/or an apparatus according to any preceding clause.

This written description uses exemplary embodiments to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the invention are defined by the following clauses:
1. An apparatus for additively manufacturing three-dimensional objects, the apparatus comprising a build region arrangement, the build region arrangement comprising:
   a first build region for additively building up at least one first three-dimensional object during operation of the apparatus;
   at least one second build region for additively building at least one second three-dimensional object during operation of the apparatus, the at least one second build region being separate from the first build region;
   at least one build material application device for applying build material in the first build region and/or in the at least one second build region;
   a first overflow region for receiving build material which was not applied in the first build region and/or in the at least one second build region via the at least one build material application device; and
   at least one second overflow region for receiving build material which was not applied in the first build region and/or in the at least one second build region via the at least one build material application device.
2. The apparatus of clause 1, wherein the first build region, the at least one second build region, the first overflow region, and the at least one second overflow region are arranged in at least one series arrangement.
3. The apparatus of clause 1, wherein the build region arrangement comprises a first overflow region, a first build region, a second build region, and a second overflow region arranged in a series arrangement, and wherein at least one build material application device is assigned to the series arrangement.
4. The apparatus of clause 3, wherein the at least one build material application device is moveably supported in a motion path in which the build material application device is moveable or moved across the first overflow region, the first build region, the second build region, and the second overflow region.
5. The apparatus of clause 3, wherein at least two build material application devices are assigned to the series arrangement, and wherein a first build material application device is moveably supported in a first motion path in which the first build material application device is moveable or moved across the first overflow region and the first build region, or vice versa, and
   wherein at least one second build material application device is moveably supported in a second motion path in which the at least one second build material application device is moveable or moved across the second build region and the second overflow region, or vice versa.
6. The apparatus of clause 1, wherein the build region arrangement comprises a first series arrangement and at least one second series arrangement, and wherein:
   the first series arrangement comprises a first overflow region, a first build region, a second build region, and a second overflow region arranged in series, and wherein at least one first build material application device is assigned to the first series arrangement; and
   the second series arrangement comprises a first overflow region, a first build region, a second build region, and a second overflow region arranged in series, and
      wherein at least one second build material application device is assigned to the second series arrangement.
7. The apparatus of clause 6, wherein the at least one first build material application device is moveably supported in a first motion path in which the at least one first build material application device is moveable or moved across the first overflow region, the first build region, the second build region, and the second overflow region, or vice versa, of the first series arrangement; and
   wherein the at least one second build material application device is moveably supported in a second motion path in which the at least one second build material application device is moveable or moved across the first overflow region, the first build region, the second build region, and the second overflow region, or vice versa, of the second series arrangement.
8. The apparatus of clause 6, wherein:
   at least two build material application devices are assigned to the first series arrangement, and wherein a first build material application device is moveably supported in a first motion path in which the first build material application device is moveable or moved across the first overflow region and the first build region, or vice versa, of the first series arrangement, and
   at least one second build material application device is moveably supported in a second motion path in which the at least one second build material application device is moveable or moved across the second build region and the second overflow region, or vice versa, of the first series arrangement; and/or
   wherein at least two build material application devices are assigned to the second series arrangement, and wherein a first build material application device is moveably supported in a first motion path in which the first build material application device is moveable or moved across the first build region and the first overflow region, or vice versa, of the second series arrangement, and
   at least one second build material application device is moveably supported in a second motion path in which the at least one second build material application device is moveable or moved across the second build region and the second overflow region, or vice versa, of the second series arrangement.
9. The apparatus of clause 6, wherein the first series arrangement is arranged parallel to the at least one second series arrangement or the first series arrangement is arranged oblique to the at least one second series arrangement.
10. The apparatus of clause 1, wherein the build region arrangement comprises a first overflow region, a first build region, a second overflow region, a second build region, and a third overflow region arranged in a series arrangement, and wherein at least one build material application device is assigned to the series arrangement.
11. The apparatus of clause 1, wherein the at least one build material application device is moveably supported in a motion path in which the build material application device is moveable or moved across the first overflow region, the first build region, the second overflow region, the second build region, and the third overflow region.
12. The apparatus of clause 10, wherein at least two build material application devices are assigned to the series arrangement; and
   wherein a first build material application device is moveably supported in a first motion path in which the first build material application device is moveable or moved across the first overflow region, the first build region, and the second overflow region, and
   at least one second build material application device is moveably supported in a second motion path in which the at least one second build material application device is moveable or moved across the second overflow region, the second build region, and the third overflow region.
13. The apparatus of clause 10, wherein the build region arrangement comprises a first series arrangement and at least one second series arrangement; and
   wherein the first series arrangement comprises a first overflow region, a first build region, a second overflow region, a second build region, and a third overflow region arranged in series, and wherein at least one first build material application device is assigned to the first series arrangement, and
   the second series arrangement comprises a first overflow region, a first build region, a second overflow region, a second build region, and a third overflow region
   arranged in series, and wherein at least one second build material application device is assigned to the second series arrangement.
14. The apparatus of clause 13, wherein:
   the at least one first build material application device is moveably supported in a first motion path in which the build material application device is moveable or moved across the first overflow region, the first build region, the second overflow region, the second build region, and the third overflow region of the first series arrangement; and
   the at least one second build material application device is moveably supported in a second motion path in which the build material application device is moveable or moved across the first overflow region, the first build region, the second overflow region, the second build region, and the third overflow region of the second series arrangement.
15. The apparatus of clause 13, wherein at least two build material application devices are assigned to the first series arrangement, and wherein a first build material application device is moveably supported in a first motion path in which the first build material application device is moveable or moved across the first overflow region, the first build region, and the second overflow region of the first series arrangement, and
   at least one second build material application device is moveably supported in a second motion path in which the at least one second build material application device is moveable or moved across the second overflow region, the second build region, and the third overflow region of the first series arrangement; and/or
   wherein at least two build material application devices are assigned to the second series arrangement, and wherein a first build material application device is moveably supported in a first motion path in which the first build material application device is moveable or moved across the first overflow region, the first build region, and the second overflow region of the second series arrangement, and
   at least one second build material application device is moveably supported in a second motion path in which the at least one second build material application device is moveable or moved across the second overflow region, the second build region, and the third overflow region of the second series arrangement.
16. The apparatus of clause 10, wherein the first series arrangement is arranged parallel to the at least one second series arrangement or the first series arrangement is arranged oblique to the at least one second series arrangement.
17. The apparatus of clause 1, wherein the build region arrangement comprises a first series arrangement and a second series arrangement; and
   wherein the first series arrangement comprises a first overflow region, a build region, and a second overflow region arranged in series, and wherein at least one first build material application device is assigned to the first series arrangement, and
   the second series arrangement comprises a first overflow region, a build region, and a third overflow region arranged in series, and wherein at least one second build material application device is assigned to the second series arrangement.
18. The apparatus of clause 17, wherein the at least one first build material application device is moveably supported in a first motion path in which the at least one second build material application device is moveable or moved across the first overflow region, the first build region, and the second overflow region of the first series arrangement; and
   wherein the at least one second build material application device is moveably supported in a second motion path in which the at least one second build material application device is moveable or moved across the first overflow region, the build region, and the second overflow region of the second arrangement.
19. The apparatus of clause 1, comprising:
   at least one solidification device which is moveably supported in at least one motion path in which the at least one solidification device can be moveable or moved in at least one solidification position and/or orientation relative to the first build region so as to selectively solidify build material applied in the first build region and/or in a solidification position and/or orientation relative to the second build region so as to selectively solidify build material applied in the second build region.
20. A method of additively manufacturing three-dimensional objects, the method comprising:
   moving at least one build material application device relative to a first build region and relative to at least one second build region, the first build region for additively building up at least one first three-dimensional object during operation of the apparatus, and the at least one second build region for additively building at least one second three-dimensional object during operation of the apparatus, the at least one second build region being separate from the first build region;
   receiving, at a first overflow region and/or at least one second overflow region, build material which was not applied in the first build region or the at least one second build region, the first overflow region for receiving build material which was not applied in the first build region and/or in the at least one second build region via the at least one build material application device, and at least one second overflow region for receiving build material which was not applied in the first build region and/or in the at least one second build region via the at least one build material application device; and
   selectively solidifying the build material applied in the first build region and/or in the at least one second build region.

## Claims

1. An apparatus (1) for additively manufacturing three-dimensional objects (2), the apparatus (1) comprising a build region arrangement (8), the build region arrangement (8) comprising:
a first build region for additively building up at least one first three-dimensional object (2) during operation of the apparatus (1);
at least one second build region for additively building at least one second three-dimensional object (2) during operation of the apparatus (1), the at least one second build region being separate from the first build region;
at least one build material application device (6) for applying build material (3) in the first build region and/or in the at least one second build region;
a first overflow region for receiving build material (3) which was not applied in the first build region and/or in the at least one second build region via the at least one build material application device (6); and
at least one second overflow region for receiving build material (3) which was not applied in the first build region and/or in the at least one second build region via the at least one build material application device (6).

2. The apparatus (1) of claim 1, wherein the first build region, the at least one second build region, the first overflow region, and the at least one second overflow region are arranged in at least one series arrangement.

3. The apparatus (1) of claim 1, wherein the build region arrangement (8) comprises a first overflow region, a first build region, a second build region, and a second overflow region arranged in a series arrangement, and wherein at least one build material application device (6) is assigned to the series arrangement.

4. The apparatus (1) of claim 3, wherein the at least one build material application device (6) is moveably supported in a motion path in which the build material application device (6) is moveable or moved across the first overflow region, the first build region, the second build region, and the second overflow region.

5. The apparatus (1) of claim 3, wherein at least two build material application devices (6) are assigned to the series arrangement, and wherein a first build material application device (6) is moveably supported in a first motion path in which the first build material application device (6) is moveable or moved across the first overflow region and the first build region, or vice versa, and
wherein at least one second build material application device (6) is moveably supported in a second motion path in which the at least one second build material application device (6) is moveable or moved across the second build region and the second overflow region, or vice versa.

6. The apparatus (1) of claim 1, wherein the build region arrangement (8) comprises a first series arrangement and at least one second series arrangement, and wherein:
the first series arrangement comprises a first overflow region, a first build region, a second build region, and a second overflow region arranged in series, and wherein at least one first build material application device (6) is assigned to the first series arrangement; and
the second series arrangement comprises a first overflow region, a first build region, a second build region, and a second overflow region arranged in series, and wherein at least one second build material application device (6) is assigned to the second series arrangement.

7. The apparatus (1) of claim 6, wherein the at least one first build material application device (6) is moveably supported in a first motion path in which the at least one first build material application device (6) is moveable or moved across the first overflow region, the first build region, the second build region, and the second overflow region, or vice versa, of the first series arrangement; and
wherein the at least one second build material application device (6) is moveably supported in a second motion path in which the at least one second build material application device (6) is moveable or moved across the first overflow region, the first build region, the second build region, and the second overflow region, or vice versa, of the second series arrangement.

8. The apparatus (1) of claim 6, wherein:
at least two build material application devices (6) are assigned to the first series arrangement, and wherein a first build material application device (6) is moveably supported in a first motion path in which the first build material application device (6) is moveable or moved across the first overflow region and the first build region, or vice versa, of the first series arrangement, and
at least one second build material application device (6) is moveably supported in a second motion path in which the at least one second build material application device (6) is moveable or moved across the second build region and the second overflow region, or vice versa, of the first series arrangement; and/or
wherein at least two build material application devices (6) are assigned to the second series arrangement, and wherein a first build material application device (6) is moveably supported in a first motion path in which the first build material application device (6) is moveable or moved across the first build region and the first overflow region, or vice versa, of the second series arrangement, and
at least one second build material application device (6) is moveably supported in a second motion path in which the at least one second build material application device (6) is moveable or moved across the second build region and the second overflow region, or vice versa, of the second series arrangement.

9. The apparatus (1) of claim 6, wherein the first series arrangement is arranged parallel to the at least one second series arrangement or the first series arrangement is arranged oblique to the at least one second series arrangement.

10. The apparatus (1) of claim 1, wherein the build region arrangement (8) comprises a first overflow region, a first build region, a second overflow region, a second build region, and a third overflow region arranged in a series arrangement, and wherein at least one build material application device (6) is assigned to the series arrangement.

11. The apparatus (1) of claim 1, wherein the at least one build material application device (6) is moveably supported in a motion path in which the build material application device (6) is moveable or moved across the first overflow region, the first build region, the second overflow region, the second build region, and the third overflow region.

12. The apparatus (1) of claim 10, wherein at least two build material application devices (6) are assigned to the series arrangement; and
wherein a first build material application device (6) is moveably supported in a first motion path in which the first build material application device (6) is moveable or moved across the first overflow region, the first build region, and the second overflow region, and
at least one second build material application device (6) is moveably supported in a second motion path in which the at least one second build material application device (6) is moveable or moved across the second overflow region, the second build region, and the third overflow region.

13. The apparatus (1) of claim 10, wherein the build region arrangement (8) comprises a first series arrangement and at least one second series arrangement; and
wherein the first series arrangement comprises a first overflow region, a first build region, a second overflow region, a second build region, and a third overflow region arranged in series, and wherein at least one first build material application device (6) is assigned to the first series arrangement, and
the second series arrangement comprises a first overflow region, a first build region, a second overflow region, a second build region, and a third overflow region arranged in series, and wherein at least one second build material application device (6) is assigned to the second series arrangement.

14. The apparatus (1) of claim 1, comprising:
at least one solidification device (7) which is moveably supported in at least one motion path in which the at least one solidification device (7) can be moveable or moved in at least one solidification position and/or orientation relative to the first build region so as to selectively solidify build material applied (3) in the first build region and/or in a solidification position and/or orientation relative to the second build region so as to selectively solidify build material applied (3) in the second build region.

15. A method of additively manufacturing three-dimensional objects (2), the method comprising:
moving at least one build material application device (6) relative to a first build region and relative to at least one second build region, the first build region for additively building up at least one first three-dimensional object (2) during operation of the apparatus (1), and the at least one second build region for additively building at least one second three-dimensional object (2) during operation of the apparatus (1), the at least one second build region being separate from the first build region;
receiving, at a first overflow region and/or at least one second overflow region, build material (3) which was not applied in the first build region or the at least one second build region, the first overflow region for receiving build material (3) which was not applied in the first build region and/or in the at least one second build region via the at least one build material application device (6), and at least one second overflow region for receiving build material (3) which was not applied in the first build region and/or in the at least one second build region via the at least one build material application device (6); and
selectively solidifying the build material applied (3) in the first build region and/or in the at least one second build region.
